# DEMANDE DE BREVET EUROPEEN

(11) **EP 4 439 225 A1**
(43) Date de publication de la demande: **02.10.2024**
(21) Numéro de dépôt: 24166083.6
(22) Date de dépôt: 25.03.2024
(51) Int. Cl.: G05F 1/575, H02M 3/07

(54) **DISPOSITIF A POMPE DE CHARGE**

(30) Priorité: 30.03.2023 FR 2303132
(71) Demandeur: STMicroelectronics International N.V., 1228 Plan-les-Ouates, Geneva (CH)
(72) Inventeur: BRANCA, Xavier, 38360 SASSENAGE (FR)
(74) Mandataire: Cabinet Beaumont

(57) **Abrégé**

La présente description concerne un dispositif (2) comprenant des pompes de charge (CP1, CP6) ayant chacune une entrée (100) recevant une tension d'entrée (Vin), une autre entrée (102) recevant un signal périodique (clk) de commande et une sortie (104) fournissant une tension de sortie (Vout). Chaque pompe de charge est sélectivement activée ou désactivée. Un premier circuit (110) fournit un signal d'erreur (Err) entre la tension de sortie (Vout) et une tension de consigne (Vref). Un deuxième circuit (120) modifie un paramètre de fonctionnement des pompes de charge sur la base du signal d'erreur (Err). Un troisième circuit (202) compare une valeur courante du paramètre à deux seuils, et, à partir du résultat des comparaisons, commande l'un parmi une augmentation, une diminution et une conservation d'un nombre de pompes de charge actives.

## Description

### Domaine technique

La présente description concerne de façon générale les circuits électroniques, par exemple intégrés, et, plus particulièrement les dispositifs ou circuits de fourniture d'une tension d'alimentation continue (DC de l'anglais "Direct Current").

### Technique antérieure

De nombreux dispositifs connus permettent de fournir une tension d'alimentation DC. Les convertisseurs à découpage (SMPS de l'anglais "Switched Mode Power Supply"), les dispositifs à pompes de charge, les régulateurs à faible chute de sortie (LDO de l'anglais "Low Drop Out") sont des exemples de tels dispositifs.

Des dispositifs à pompe de charge connus comprennent plusieurs pompes de charge connectées en parallèle. Chaque pompe de charge d'un tel dispositif reçoit une même tension d'entrée partagée entre toutes les pompes de charge, et fournit une tension de sortie sur un noeud connecté aux sorties de toutes les pompes de charge.

Toutefois, ces dispositifs connus comprenant plusieurs pompes de charge connectées en parallèle présentent divers inconvénients, par exemple en ce qui concerne leurs consommations, par exemple leurs consommations statiques liées aux commutations dans les pompes de charge.

### Résumé de l'invention

Il existe un besoin de pallier tout ou partie des inconvénients des dispositifs connus à pompe de charge, en particulier des dispositifs connus comprenant plusieurs pompes de charge connectées en parallèle et configurées pour fournir une tension continue de sortie du dispositif.

Un mode de réalisation pallie tout ou partie des inconvénients des dispositifs connus à pompe de charge, en particulier des dispositifs connus comprenant plusieurs pompes de charge connectées en parallèle et configurées pour fournir une tension continue de sortie du dispositif.

Un mode de réalisation prévoit un dispositif comprenant :
des pompes de charge ayant chacune une première entrée connectée à un premier noeud configuré pour recevoir une tension d'entrée des pompes de charge, une deuxième entrée configurée pour recevoir un signal périodique de commande des commutations dans les pompes de charge et une sortie connectée à un deuxième noeud configuré pour fournir une tension de sortie du dispositif, chaque pompe de charge étant configurée pour être sélectivement activée ou désactivée ;
un premier circuit configuré pour fournir un signal indiquant un écart entre la tension de sortie et une tension de consigne ;
un deuxième circuit configuré pour modifier un paramètre de fonctionnement desdites pompes de charge sur la base dudit signal ; et
un troisième circuit configuré pour comparer une valeur courante dudit paramètre à un premier seuil et à un deuxième seuil, et, à partir du résultat des comparaisons, pour commander l'un parmi une augmentation d'un nombre de pompes de charge actives, une diminution du nombre de pompes de charge actives et une conservation du nombre de pompes de charge actives. De préférence, les pompes de charge reçoivent toutes le même signal périodique de commande. De préférence, chaque pompe de charge comprend une entrée configurée pour recevoir un signal sélectionnant l'état de la pompe de charge parmi l'état activé et l'état désactivé. De préférence, le troisième circuit est configuré pour fournir, à chaque pompe de charge, le signal sélectionnant l'état de la pompe de charge parmi l'état activé et l'état désactivé.

Selon un mode de réalisation, le paramètre appartient au groupe comprenant la fréquence du signal de commande, la tension d'entrée, le seuil de transistors MOS configurés pour mettre en oeuvre des commutations dans les pompes de charge et des niveaux de tension grille-source desdits transistors.

Selon un mode de réalisation, le troisième circuit est configuré pour commander :
une augmentation du nombre de pompes de charge actives quand le résultat des comparaisons indique que la valeur courante est d'un même premier côté desdits premier et deuxième seuils ;
une conservation du nombre de pompes de charge actives si le résultat des comparaisons indique que la valeur courante est comprise entre les premier et deuxième seuils ; et
une diminution du nombre de pompes de charge actives si le résultat des comparaisons indique que la valeur courante est d'un même deuxième côté desdits premier et deuxième seuils.

Selon un mode de réalisation, le troisième circuit comprend un premier comparateur pour comparer la valeur courante du paramètre au premier seuil, un deuxième comparateur pour comparer la valeur courante du paramètre au deuxième seuil, et un circuit de traitement configuré pour recevoir un signal de sortie de chacun des premier et deuxième comparateurs et pour fournir, sur la base de ces signaux de sortie, un signal sélectionnant l'état de chacune des pompes de charge parmi l'état activé et l'état désactivé. Dit autrement, le circuit de traitement est configuré pour fournir, sur la base de ces signaux de sortie et à chaque pompe de charge, le signal sélectionnant l'état de la pompe de charge parmi l'état activé et l'état désactivé.

Selon un mode de réalisation, ledit paramètre est choisi parmi la fréquence du signal de commande et la tension d'entrée, le troisième circuit étant configuré pour commander :
une augmentation du nombre de pompes de charge actives si le résultat des comparaisons indique que la valeur courante est supérieure aux premier et deuxième seuils ;
une conservation du nombre de pompes de charge actives si le résultat des comparaisons indique que la valeur courante est comprise entre les premier et deuxième seuils ; et
une diminution du nombre de pompes de charge actives si le résultat des comparaisons indique que la valeur courante est inférieure aux premier et deuxième seuils.

Selon un mode de réalisation, le paramètre est la tension d'entrée, la fréquence du signal de commande étant de préférence constante.

Selon un mode de réalisation, le deuxième circuit est configuré pour augmenter la tension d'entrée si la tension de sortie est inférieure à la tension de consigne et pour diminuer la tension d'entrée si la tension de sortie est supérieure à la tension de consigne.

Selon un mode de réalisation :
le premier circuit comprend un amplificateur opérationnel ayant une entrée non-inverseuse configurée pour recevoir la tension de sortie, une entrée inverseuse configurée pour recevoir la tension de consigne, et une sortie configurée pour fournir le signal indiquant l'écart entre la tension de sortie et la tension de consigne ; et
le deuxième circuit comprend un transistor MOS à canal P connecté entre le premier noeud et un noeud configuré pour recevoir un potentiel d'alimentation, la grille du transistor étant connectée à la sortie de l'amplificateur opérationnel du premier circuit.

Selon un mode de réalisation, le paramètre est la fréquence du signal de commande, la tension d'entrée étant de préférence constante.

Selon un mode de réalisation, le deuxième circuit est configuré pour augmenter la fréquence si la tension de sortie est inférieure à la tension de consigne et pour diminuer la fréquence si la tension de sortie est supérieure à la tension de consigne.

Selon un mode de réalisation, le troisième circuit est configuré, lorsque le résultat des comparaisons correspond à une augmentation du nombre de pompes de charge actives, pour déclencher une première temporisation et pour commander ladite augmentation à la fin de la première temporisation uniquement si le résultat des comparaisons est le même qu'au début de la première temporisation.

Selon un mode de réalisation, le troisième circuit est configuré, lorsque le résultat des comparaisons correspond à une diminution du nombre de pompes de charge actives, pour déclencher une deuxième temporisation et pour commander ladite diminution à la fin de la deuxième temporisation uniquement si le résultat des comparaisons est le même qu'au début de la deuxième temporisation.

Un autre mode de réalisation prévoit un capteur de temps vol comprenant un dispositif tel que décrit ci-dessus, et une matrice de pixels comprenant chacun une diode à avalanche à photon unique, le dispositif étant configuré pour alimenter la matrice de pixels avec sa tension de sortie.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, de manière schématique et en partie sous la forme de blocs, un exemple d'un dispositif à pompe de charge ;
la figure 2 représente, de manière schématique et en partie sous la forme de blocs, un exemple d'un mode de réalisation d'un dispositif à pompe de charge ; et
la figure 3 représente, de manière schématique et en partie sous la forme de blocs, un autre exemple d'un mode de réalisation d'un dispositif à pompe de charge.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, les divers circuits électroniques connus, par exemple des circuits intégrés, et les divers systèmes ou applications connus dans lesquels peut être prévu un dispositif à pompe de charge pour fournir une tension d'alimentation DC n'ont pas été détaillés, les modes de réalisation et variantes de réalisation de dispositifs à pompe de charge décrits ici étant compatibles avec ces circuits, systèmes et applications connus.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

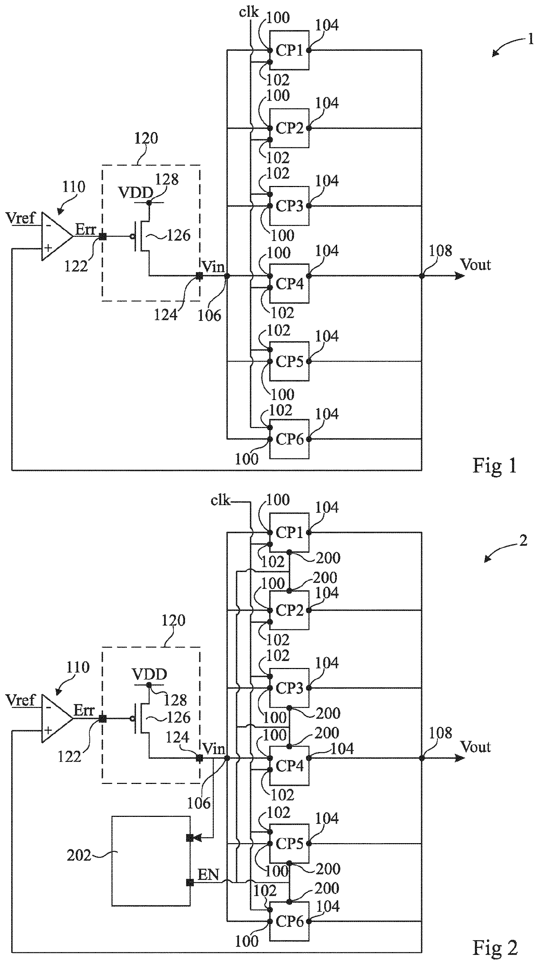

La figure 1 représente, de manière schématique et en partie sous la forme de blocs, un exemple d'un dispositif 1 à pompe de charge. Le dispositif 1 est configurée pour fournir une tension continue Vout.

Le dispositif 1 comprend N pompes de charge CPi, avec N entier supérieur ou égal 2, de préférence supérieur ou égal à 3, et i un indice entier allant de 1 à N. Dans l'exemple de la figure 1, N est égal à 6 (CP1, CP2, CP3, CP4, CP5, CP6), étant entendu que, en pratique, le nombre N peut être différent de 6, par exemple supérieur à 6.

Chaque pompe de charge CPi comprend une entrée 100 configurée pour recevoir une tension Vin d'entrée des pompes de charge CPi. Chaque pompe de charge CPi est une pompe de charge à capacité commutée. Ainsi, chaque pompe de charge CPi comprend une entrée 102 configurée pour recevoir un signal clk. Le signal clk est un signal périodique de commande des pompes de charge CPi, et, plus particulièrement, des commutations dans chaque pompe de charge CPi. Le signal clk est le même pour toutes les pompes de charge CPi. Chaque pompe de charge CPi comprend une sortie 104 configurée pour fournir une tension de sortie de la pompe de charge.

Les pompes de charge CPi sont connectées en parallèle les unes aux autres. Dit autrement, toutes les pompes de charge CPi ont leurs entrées 100 connectées à un même noeud 106 configuré pour recevoir la tension Vin d'entrée des pompes de charge CPi, et toutes les pompes de charge ont leurs sorties 104 connectées à un même noeud 108 configuré pour fournir la tension Vout du dispositif 1.

Chaque pompe de charge CPi est configurée pour fournir une tension de sortie Vout à une valeur égale à K fois la valeur de sa tension d'entrée Vin. De préférence, les pompes de charge CPi sont identiques les unes aux autres.

Le dispositif 1 comprend en outre un circuit 110. Le circuit 110 est configuré pour fournir un signal Err, par exemple une tension, indiquant une valeur d'un écart entre la valeur de la tension Vout et la valeur d'une tension de consigne Vref. Le circuit 110 reçoit, par exemple, la tension Vout ou un signal indiquant la valeur de la tension Vout, et la tension Vref ou un signal indiquant la valeur de la tension Vref.

A titre d'exemple, le circuit 110 comprend un amplificateur opérationnel 112 ayant une première entrée, par exemple l'entrée inverseuse (-) en figure 1, configurée pour recevoir la tension Vref, une deuxième entrée, par exemple l'entrée non inverseuse (+) en figure 1, connectée au noeud 108 pour recevoir la tension Vout, et une sortie configurée pour fournir le signal Err.

A titre d'exemple alternatif, le circuit 110 comprend l'amplificateur opérationnel 112 mais sa première entrée reçoit un signal indiquant la valeur de la tension de consigne Vref et sa deuxième entrée reçoit un signal indiquant la valeur de la tension Vout.

A partir du signal Err, le dispositif 1 commande un paramètre de fonctionnement des pompes de charge CPi, de sorte à maintenir la tension Vout égale à la tension Vref. Pour cela, le dispositif 1 comprend un circuit 120 configuré pour modifier (ou adapter) ce paramètre de fonctionnement en fonction du signal Err.

Dans l'exemple de la figure 1, ce paramètre est la valeur de la tension Vin. De préférence, la fréquence du signal clk, qui est un autre paramètre de fonctionnement des pompes de charge CPi, est alors constante, ou, au moins, ne dépend pas du signal Err.

Le circuit 120 est alors configuré pour augmenter la tension Vin si la tension Vout est inférieure à la tension Vref et pour diminuer la tension Vin si la tension Vout est supérieure à la tension Vref. Par exemple, le circuit 120 reçoit le signal Err sur une entrée 122 du circuit 120, et fournit la tension Vin sur une sortie 124 du circuit 120, la sortie 124 étant connectée au noeud 106. Dit autrement, le circuit 120 fournit la tension Vin dans cet exemple.

A titre d'exemple, le circuit 120 comprend un transistor MOS ("Métal Oxide Semiconductor" - Métal Oxyde Semiconducteur) à canal P, ou transistor PMOS, 126. Le transistor 126 est connecté entre un noeud 128 configuré pour recevoir une tension d'alimentation VDD, et la sortie 124 du circuit 120, c'est à dire le noeud 106 dans cet exemple. Le transistor 126 est commandé à partir du signal Err, par exemple par le signal Err. Par exemple, le transistor 126 a sa source connectée au noeud 128, son drain connecté à la sortie 124 et sa grille connectée à l'entrée 122 du circuit 120.

Chaque pompe de charge CPi a une impédance de sortie qui limite la quantité maximale de courant que cette pompe de charge peut fournir au noeud 108 pour maintenir la tension Vout à la même valeur que la tension Vref. La prévision de plusieurs pompes de charge en parallèle permet d'augmenter la quantité maximale de courant que le dispositif 1 peut fournir au noeud 108 par rapport à un dispositif 1 qui ne comprendrait qu'une seule pompe de charge CPi. Ainsi, le nombre N de pompes de charge CPi est déterminé par la consommation maximale d'une charge connectée au noeud 108 et alimentée par la tension Vout, par exemple dans les pires conditions PVT ("Process Voltage Température" - Procédé Tension Température).

Toutefois, augmenter le nombre N de pompes de charge CPi du dispositif 1 pour s'assurer que le dispositif 1 sera capable d'alimenter la charge dans les pires conditions PVT présente l'inconvénient d'augmenter la consommation du dispositif 1, par exemple car cela augmente la consommation statique du dispositif 1 qui est liée aux pertes ou fuites dans les pompes de charge CPi.

Lorsque la charge alimentée par le dispositif 1 est configurée pour fonctionner selon au moins deux modes d'alimentation, par exemple un mode basse consommation et un mode de consommation nominale, dans d'autres exemples de dispositifs 1 non illustrés, il est prévu de désactiver une ou plusieurs pompes de charge uniquement sur la base du mode d'alimentation dans lequel se trouve la charge. En particulier, dans le mode d'alimentation où la charge est censée le plus consommer, par exemple le mode de consommation nominale, toutes les pompes de charge CPi sont actives bien que, dans ce mode d'alimentation, la charge ne soit pas en permanence à sa consommation maximale sous les pires conditions PVT. En effet, la connaissance du mode d'alimentation de la charge donne uniquement une indication d'une plage de valeurs de consommation dans laquelle se situe la valeur courante de consommation de la charge, sans donner la valeur courante de consommation de la charge.

Ainsi, malgré l'adaptation décrite ci-dessus du nombre de pompes de charge actives dans le dispositif 1 en fonction d'un mode d'alimentation de la charge, le nombre de pompes de charge actives est la plupart du temps supérieur au nombre de pompes de charge qu'il faudrait pour répondre à la consommation courante de la charge.

Il est ici proposé d'adapter le nombre de pompes de charge CPi actives dans un dispositif à pompe de charge du type de celui décrit en relation avec la figure 1, non pas en se basant sur la connaissance d'un mode d'alimentation de la charge alimentée par le dispositif, mais en se basant sur la consommation courante de la charge. Pour cela, il est prévu de comparer à deux seuils la valeur courante d'un paramètre de fonctionnement des pompes de charge qui est adapté en fonction du signal Err et qui reflète (ou est représentatif de) la consommation courante (ou instantanée) de la charge, et d'adapter le nombre de pompes de charge actives en fonction du résultat de ces comparaisons.

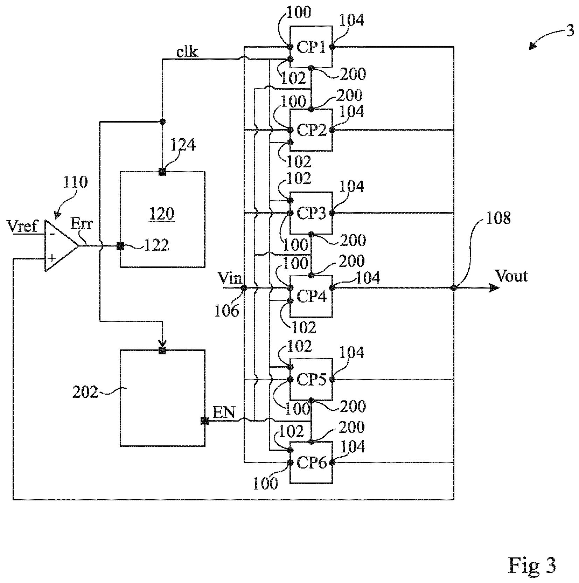

Des exemples de mode de réalisation d'un tel dispositif vont maintenant être décrits en relation avec les figures 2 et 3.

La figure 2 représente, de manière schématique et en partie sous la forme de blocs, un exemple d'un mode de réalisation d'un dispositif 2 à pompe de charge.

Le dispositif 2 est similaire au dispositif 1 décrit précédemment, et seules les différences entre ces deux dispositifs 1 et 2 sont ici mises en exergue. Ainsi, sauf indication contraire, tout ce qui a été indiqué pour le dispositif 1 s'applique au dispositif 2.

Par rapport au dispositif 1, les pompes de charge CPi du dispositif 2 sont configurées pour être chacune sélectivement activée ou désactivée. Par exemple, par rapport aux pompes de charge CPi du dispositif 1, les pompes de charge CPi du dispositif 2 comprennent chacune une entrée 200 supplémentaire configurée pour recevoir un signal EN indiquant à cette pompe de charge si elle doit être active ou inactive. A titre d'exemple, le signal EN est un signal numérique sur plusieurs bits commun à toutes les pompes de charge CPi, les différentes combinaisons d'états des bits du signal EN indiquant, ou commandant, quelles pompes de charge CPi sont actives et quelles pompes de charge CPi sont inactives parmi les N pompes de charge CPi du dispositif 2. Par exemple, le signal EN comprend N bits, chaque bit correspondant à une pompe de charge CPi et commandant l'état actif, respectivement inactif, de la pompe de charge lorsque le bit est dans un premier état binaire, respectivement dans un deuxième état binaire.

Par rapport au dispositif 1, le dispositif 2 comprend en outre un circuit 202.

Le circuit 202 est configuré pour comparer à un premier seuil Vth1 et à un deuxième seuil Vth2, la valeur courante du paramètre de fonctionnement des pompes de charge CPi qui est adapté en fonction du signal Err. Par exemple, le circuit 202 reçoit un signal indiquant la valeur courante de ce paramètre.

Le circuit 202 est en outre configuré, à partir du résultat des comparaisons, pour commander l'un parmi une augmentation d'un nombre de pompes de charge CPi actives, une diminution du nombre de pompes de charge CPi actives et une conservation du nombre de pompes de charge CPi actives. Le circuit 202 fournit donc le signal EN sur une sortie 204 du circuit 202. Dit autrement, en fonction du résultat des comparaisons, le circuit 202 met en oeuvre soit une diminution du nombre de pompes de charge CPi actives, soit une augmentation du nombre de pompes de charge CPi actives, soit une absence de modification de ce nombre de pompes de charge CPi actives. Dit encore autrement, le circuit 202 est configuré pour adapter le nombre de pompes de charge CPi actives en fonction du résultat des comparaisons de la valeur courante du paramètre de fonctionnement des pompes de charge CPi aux seuils Vth1 et Vth2.

Plus particulièrement, les deux seuils Vth1 et Vth2 définissent trois plages de valeurs, à savoir une première plage de valeurs ayant toutes ses valeurs inférieures aux deux seuils Vth1 et VTh2, une deuxième plage de valeurs ayant toutes ses valeurs comprises entre les deux seuils Vth1 et Vth2, et une troisième plage de valeurs ayant toutes ses valeurs supérieures aux seuils Vth1 et Vth2. Le résultat des comparaisons aux deux seuils Vth1 et Vth2 de la valeur courante du paramètre de fonctionnement des pompes de charge CPi permet au circuit 202 de déterminer si cette valeur courante est dans la deuxième plage, le circuit 202 ne modifiant alors pas le nombre de pompes de charge CPi actives, si cette valeur courante est dans l'une des première et troisième plages de valeurs, le circuit 202 augmentant alors le nombre de pompes de charge CPi actives, ou si cette valeur courante est dans l'autre des première et troisième plages de valeurs, le circuit 202 diminuant alors le nombre de pompes de charge CPi actives. Dit autrement, le circuit 202 est configuré pour commander:
une augmentation du nombre de pompes de charge CPi actives quand le résultat des comparaisons indique que la valeur courante du paramètre est d'un même premier côté des seuils Vth1 et Vth2, par exemple lorsque la valeur courante est supérieure, respectivement inférieure, aux deux seuils Vth1 et Vth2 ;
une conservation du nombre de pompes de charge actives CPi si le résultat des comparaisons indique que la valeur courante est comprise entre les seuils Vth1 et Vth2 ; et
une diminution du nombre de pompes de charge CPi actives si le résultat des comparaisons indique que la valeur courante est d'un même deuxième côté des seuils Vth1 et Vth2, par exemple lorsque la valeur courante est inférieure, respectivement supérieure, aux deux seuils Vth1 et Vth2.

Dans l'exemple de la figure 2, le paramètre de fonctionnement des pompes de charge CPi qui est adapté en fonction du signal Err et dont la valeur courante est comparée aux seuils Vth1 et Vth2 pour adapter le nombre de pompes de charge CPi actives est la tension Vin.

Dans cet exemple, si la charge alimentée par le dispositif 2 consomme trop pour le nombre de pompes de charge CPi actives du dispositif 2, la tension Vout va chuter en dessous de la tension Vref, ce qui conduit à une augmentation de la valeur de tension Vin. A l'inverse, si la charge alimentée par le dispositif 2 ne consomme pas assez pour le nombre de pompes de charge CPi actives, la tension Vout va augmenter au-dessus de la tension Vref, ce qui conduit à une diminution de la valeur de la tension Vin.

Ainsi, dans cet exemple, si la valeur courante de la tension Vin est supérieure aux seuils Vth1 et Vth2, cela signifie que la charge consomme trop pour le nombre de pompes de charge CPi actives, et le circuit 202 commande alors une augmentation de ce nombre de pompes de charge CPi actives. A l'inverse, si la valeur courante de la tension Vin est inférieure aux seuils Vth1 et Vth2, cela signifie que le dispositif 2 fournit trop de puissance à la charge par rapport à la consommation de cette dernière, et le circuit 202 commande alors une diminution du nombre de pompes de charge CPi actives. Dans le cas où le nombre de pompes de charge actives est adapté à la consommation de la charge, la tension Vout varie peu par rapport à la tension Vref, d'où il résulte que la valeur courante de la tension Vin est relativement stable et reste comprise entre les seuils Vth1 et Vth2, le circuit 202 ne modifiant alors pas le nombre de pompes de charge CPi actives.

A titre d'exemple, lorsque le circuit 202 doit augmenter ou diminuer le nombre de pompes de charge CPi actives, il met à jour son signal EN en conséquence.

A titre d'exemple, pour comparer les seuils Vth1 et Vth2 avec la valeur courante du paramètre de fonctionnement des pompes de charge CPi qui est adapté sur la base du signal Err, le circuit 202 comprend deux comparateurs. Un premier des deux comparateurs compare la valeur courante du paramètre (Vin dans l'exemple de la figure 2) au seuil Vth1 et un deuxième des deux comparateurs compare la valeur courante du paramètre (Vin dans l'exemple de la figure 2) au seuil Vth2. Chacun des deux comparateurs fournit un signal de sortie indiquant le résultat de la comparaison qu'il met en oeuvre. Toujours à titre d'exemple, le circuit 202 comprend en outre un circuit de traitement recevant les signaux de sortie des deux comparateurs, et fournissant, sur la base de ces signaux, le signal EN indiquant à chaque pompe de charge CPi si elle doit être active ou non. Dit autrement, le signal EN sélectionne l'état de chaque pompe de charge CPi parmi l'état activé et l'état désactivé.

A titre d'exemple, les pompes de charge CPi du dispositif 2 sont organisées en groupes (ou tranches - "slice" en anglais), par exemple en au moins deux groupes, de préférence en au moins trois groupes. Dans ce cas, chaque pompe de charge CPi n'appartient qu'à un seul de ces groupes. Par exemple, en figure 2, les N=6 pompes de charge CPi sont organisées en trois groupes de deux pompes de charge CPi, par exemple un premier groupe comprenant les pompes de charge CP1 et CP2, un deuxième groupe comprenant les pompes de charge CP3 et CP4, et un troisième groupe comprenant les pompes de charge CP5 et CP6.

Selon un mode de réalisation où les pompes de charge CPi sont organisées en groupes, lorsque le circuit 202 commande une augmentation du nombre de pompes de charge CPi actives, le circuit 202 commande l'activation simultanée, en plus des pompes de charge CPi déjà actives, de toutes les pompes de charge d'au moins un groupe, par exemple d'un unique groupe. A l'inverse, lorsque le circuit 202 commande une diminution du nombre de pompes de charge CPi actives, le circuit 202 commande la désactivation simultanée, en plus des pompes de charge CPi déjà inactives, de toutes les pompes de charge CPi d'au moins un groupe, par exemple d'un unique groupe.

A titre de variante, à chaque augmentation du nombre de pompes de charge CPi actives par le circuit 202, le circuit 202 commande l'activation d'une seule pompe de charge CPi en plus de celles qui étaient déjà actives, et, à l'inverse, à chaque diminution du nombre de pompes de charge actives par le circuit 202, ce dernier commande la désactivation d'une seule pompe de charge CPi en plus de celles qui étaient déjà inactives.

A titre d'autre variante de réalisation, le nombre de pompes de charge supplémentaires activées à chaque augmentation du nombre de pompes de charge CPi actives par le circuit 202 peut être différent du nombre de pompes de charge supplémentaire désactivées à chaque diminution du nombre de pompes de charge CPi actives par le circuit 202.

Selon un mode de réalisation, lorsque le résultat des comparaisons de la valeur courante du paramètre de fonctionnement des pompes de charge CPi avec les seuils Vth1 et Vth2 indique au circuit 202 que le nombre de pompes de charge CPi actives doit être augmenté, c'est à dire lorsque le résultat des comparaisons correspond à une augmentation du nombre de pompes de charge CPi actives, le circuit 202 est configuré pour déclencher une temporisation Temp1 et pour mettre en oeuvre, c'est à dire pour commander, l'augmentation du nombre de pompes de charge CPi actives à la fin de la temporisation Temp1 uniquement si le résultat des comparaisons à la fin de la temporisation Temp1 n'a pas changé par rapport à celui au début de la temporisation Temp1.

A titre de variante, lorsque le résultat des comparaisons de la valeur courante du paramètre de fonctionnement des pompes de charge CPi avec les seuils Vth1 et Vth2 indique au circuit 202 que le nombre de pompes de charge CPi actives doit être augmenté, le circuit 202 commande l'augmentation du nombre de pompes de charge CPi actives immédiatement, sans la temporisation Temp1.

Selon un mode de réalisation, lorsque le résultat des comparaisons de la valeur courante du paramètre de fonctionnement des pompes de charge CPi avec les seuils Vth1 et Vth2 indique au circuit 202 que le nombre de pompes de charge CPi actives doit être diminué, c'est à dire lorsque le résultat des comparaisons correspond à une diminution du nombre de pompes de charge CPi actives, le circuit 202 est configuré pour déclencher une temporisation Temp2 et pour mettre en oeuvre, c'est à dire pour commander, la diminution du nombre de pompes de charge CPi actives à la fin de la temporisation Temp2 uniquement si le résultat des comparaisons à la fin de la temporisation Temp2 n'a pas changé par rapport à celui au début de la temporisation Temp2.

A titre de variante, lorsque le résultat des comparaisons de la valeur courante du paramètre de fonctionnement des pompes de charge CPi avec les seuils Vth1 et Vth2 indique au circuit 202 que le nombre de pompes de charge CPi actives doit être diminué, le circuit 202 commande la diminution du nombre de pompes de charge CPi actives immédiatement, sans la temporisation Temp2.

Dans des modes de réalisation, le circuit 202 met en oeuvre les deux temporisations Temp1 et Temp2. Dans d'autres modes de réalisation, le circuit 202 ne met en oeuvre aucune des temporisations Temp1 et Temp2. Dans encore d'autres modes de réalisation, le circuit 202 ne met en oeuvre que l'une des deux temporisations Temp1 et Temp2.

Dans un mode de réalisation particulier, le circuit 202 ne met en oeuvre que la temporisation Temp2. L'absence de temporisation Temp1 permet au dispositif 2 de réagir immédiatement à une augmentation de la consommation de la charge, ce qui permet d'éviter une chute trop importante de la tension Vout. Dans ce cas, la prévision de la temporisation Temp2 permet d'éviter des instabilités du dispositif 2, c'est à dire des augmentations et des diminutions alternées successives et rapprochées du nombre de pompes de charge CPi actives.

Dans l'exemple de la figure 2, le paramètre de fonctionnement des pompes de charge CPi qui est adapté à partir du signal Err et dont la valeur courante est comparée aux seuils Vth1 et Vth2 est la tension Vin. Ainsi, le circuit 202 reçoit un signal représentatif de (ou indiquant) la valeur de la tension Vin. Par exemple, le circuit 202 reçoit directement la tension Vin comme cela est illustré en figure 2. A titre d'exemple alternatif, le circuit 202 reçoit un signal, par exemple une tension, dont la valeur est déterminée par celle de la tension Vin, par exemple une tension de sortie d'un pont diviseur de tension alimenté par la tension Vout.

Bien que l'exemple de la figure 2 illustre le cas où le paramètre de fonctionnement des pompes de charge CPi qui est adapté à partir du signal Err et dont la valeur courante est comparée aux seuils Vth1 et Vth2 est la tension Vin, dans d'autres exemples, ce paramètre peut être la fréquence du signal clk de commande des commutations dans les pompes de charge CPi, le seuil des transistors MOS mettant en oeuvre les commutations dans les pompes de charge CPi, ou encore les valeurs des tensions grille-source correspondant aux états passant et bloqué de ces transistors MOS. En effet, dans d'autres exemples de modes de réalisation, le circuit 120 est configuré pour adapter la valeur des seuils des transistors MOS mettant en oeuvre les commutations dans les pompes de charge CPi, par exemple en adaptant une tension de grille arrière de ces transistors, par exemple de sorte à diminuer la valeur de ce seuil quand la tension Vout est inférieure à la tension Vref et s'éloigne de cette tension Vref et à augmenter la valeur de ce seuil quand la tension Vout est supérieure à la tension Vref et s'éloigne de la tension Vref. Dans ce cas, le signal indiquant la valeur courante du seuil de ces transistors MOS est, par exemple, une tension de grille arrière de ces transistors permettant de moduler la valeur du seuil de ces transistors. Dans encore d'autres exemples de modes de réalisation, le circuit 120 est configuré pour adapter la valeur de la tension grille-source des transistors MOS mettant en oeuvre les commutations dans les pompes de charge CPi qui correspond à un état bloqué de ces transistors et/ou la valeur de cette tension grille-source qui correspond à un état passant de ces transistors, par exemple de sorte à diminuer ou augmenter le temps nécessaire à la charge et/ou la décharge de la capacité de grille des transistors de sorte à diminuer ou augmenter la quantité maximale de courant que délivre le dispositif 2 à une charge sur une période du signal clk.

Plus généralement, le paramètre de fonctionnement des pompes de charge CPi qui est adapté à partir du signal Err et dont la valeur courante est comparée aux seuils Vth1 et Vth2 est choisi dans un groupe comprenant la tension Vin, la fréquence du signal clk, le seuil des transistors MOS mettant en oeuvre les commutations dans les pompes de charge CPi et les niveaux de la tension grille-source de ces transistors. Dit autrement, le paramètre de fonctionnement des pompes de charge CPi qui est adapté en fonction du signal Err et dont la valeur courante est comparée aux seuils Vth1 et Vth2 est un paramètre représentatif de la consommation courante ou instantanée de la charge connectée au noeud 108 du dispositif 2.

La figure 3 représente, de manière schématique et en partie sous la forme de blocs, un autre exemple d'un mode de réalisation d'un dispositif 3 à pompe de charge.

Le dispositif 3 est similaire au dispositif 2 décrit précédemment, et seules les différences entre ces deux dispositifs 2 et 3 sont ici mises en exergue. Ainsi, sauf indication contraire, tout ce qui a été indiqué pour le dispositif 2 s'applique au dispositif 3.

Par rapport au dispositif 2 où le paramètre de fonctionnement des pompes de charge CPi dont la valeur courante est comparée aux seuils Vth1 et Vth2 est la tension Vin, dans le dispositif 3, ce paramètre est la fréquence du signal clk de commande des pompes de charge CPi. Dans ce cas, la tension Vin est de préférence constante.

Par rapport au dispositif 2, le circuit 120 du dispositif 3 n'est donc pas configuré pour augmenter, respectivement diminuer, la tension Vin lorsque la tension Vout devient inférieure à la tension Vref, respectivement supérieure à la tension Vref. Dans le dispositif 3, le circuit 120 est configuré pour augmenter, respectivement diminuer, la fréquence du signal clk lorsque la tension Vout devient inférieure à la tension Vref, respectivement supérieure à la tension Vref.

Ainsi, dans le dispositif 3 la sortie 124 du circuit 120 n'est pas connectée au noeud 106 et ne fournit pas la tension Vin. En effet, la sortie 124 commande alors la fréquence du signal clk. Par exemple, la sortie 124 du circuit 120 fournit le signal clk comme cela est représenté en figure 3. A titre d'exemple alternatif, la sortie 124 du circuit 120 fournit un signal de commande indiquant une valeur visée de la fréquence du signal clk, ce signal étant reçu par un circuit de génération du signal clk configuré pour que la valeur de la fréquence du signal clk qu'il fournit soit égale à la valeur visée indiquée par le signal de commande.

En outre, par rapport au circuit 202 du dispositif 2, le circuit 202 du dispositif 3 est configuré pour recevoir un signal lui indiquant la valeur courante de la fréquence du signal clk. Par exemple, le circuit 202 du dispositif 3 reçoit le signal clk, et est configuré pour déterminer la valeur de la fréquence de ce signal clk reçu. A titre d'exemple alternatif, le circuit 202 reçoit un signal indiquant la valeur courante de la fréquence du signal clk, par exemple un signal de commande qui est fourni par le circuit 120 du dispositif 3 à un circuit de génération du signal clk et qui indique la valeur de la fréquence du signal clk que le circuit de génération doit fournir. A titre d'autre exemple alternatif, le circuit 120 fournit directement le signal clk, et fournit en outre un signal au circuit 202 lui indiquant la valeur courante de la fréquence du signal clk.

Dans le dispositif 3, comme pour la tension Vin dans le dispositif 2, lorsque la valeur de la fréquence du signal clk augmente, cela indique que la consommation de la charge alimentée par la tension Vout est trop forte pour le nombre de pompes de charge CPi actives, et, à l'inverse, lorsque la valeur de la fréquence du signal clk diminue, cela indique que la charge alimentée par la tension Vout ne consomme pas assez pour le nombre de pompes de charge CPi actives.

Ainsi, dans le dispositif 3, si la valeur courante de la fréquence du signal clk est supérieure aux seuils Vth1 et Vth2, cela signifie que la charge consomme trop pour le nombre de pompes de charge CPi actives, et le circuit 202 commande alors une augmentation de ce nombre de pompes de charge CPi actives. A l'inverse, si la valeur courante de la fréquence du signal clk est inférieure aux seuils Vth1 et Vth2, cela signifie que le dispositif 3 fournit trop de puissance à la charge par rapport à la consommation de cette dernière, et le circuit 202 commande alors une diminution du nombre de pompes de charge CPi actives. Dans le cas où le nombre de pompes de charge actives est adapté à la consommation de la charge, la tension Vout varie peu par rapport à la tension Vref, d'où il résulte que la valeur courante de la tension Vin est relativement stable et reste comprise entre les seuils Vth1 et Vth2, le circuit 202 ne modifiant alors pas le nombre de pompes de charge CPi actives.

Dans les exemples des figures 2 et 3 décrits ci-dessus, le circuit 120 est configuré pour augmenter la valeur du paramètre de fonctionnement des pompes de charge (la tension Vin en figure 2, la fréquence du signal clk en figure 3) lorsque la tension Vout est inférieure à la tension Vref et s'éloigne de cette dernière, et pour diminuer la valeur de ce paramètre lorsque la tension Vout est supérieure à la tension Vref et s'éloigne de la tension Vref.

Toutefois, en fonction du paramètre de fonctionnement que le circuit 120 adapte sur base du signal Err, le circuit 120 est configuré pour diminuer la valeur de ce paramètre lorsque la tension Vout est inférieure à la tension Vref et s'éloigne de cette dernière, et pour augmenter la valeur de ce paramètre lorsque la tension Vout est supérieure à la tension Vref et s'éloigne de la tension Vref. Dans ce cas :
- si la valeur courante de ce paramètre est inférieure aux seuils Vth1 et Vth2, cela signifie que la charge consomme trop pour le nombre de pompes de charge CPi actives, et le circuit 202 commande alors une augmentation du nombre de pompes de charge CPi actives,
- si la valeur courante de ce paramètre est supérieure aux seuils Vth1 et Vth2, cela signifie que les pompes de charge CPi actives fournissent trop de puissance à la charge par rapport à la consommation de cette dernière, et le circuit 202 commande alors une diminution du nombre de pompes de charge CPi actives, et
- si la valeur courante du paramètre est comprise entre les seuils Vth1 et Vth2, cela signifie que le nombre de pompes de charge actives est adapté à la consommation de la charge, et le circuit 202 ne modifie alors pas le nombre de pompes de charge CPi actives.

Dans les exemples de modes de réalisation et de variantes de dispositifs à pompe de charge décrits ci-dessus, bien que cela n'ait jamais été indiqué car cela semble évident pour la personne du métier, lorsque le résultat des comparaisons des seuils Vth1 et Vth2 avec la valeur courante du paramètre de fonctionnement des pompes de charge CPi indique au circuit 202 qu'il doit augmenter le nombre de pompes de charge actives, la mise en oeuvre de cette augmentation du nombre de pompes de charge actives par le circuit 202 n'est possible que s'il reste au moins une pompe de charge CPi inactive parmi les N pompes de charge CPi. De manière symétrique, bien que cela n'ait jamais été indiqué car cela semble évident pour la personne du métier, lorsque le résultat des comparaisons des seuils Vth1 et Vth2 avec la valeur courante du paramètre de fonctionnement des pompes de charge CPi indique au circuit 202 qu'il doit diminuer le nombre de pompes de charge actives, la mise en oeuvre de cette diminution du nombre de pompes de charge actives par le circuit 202 n'est possible que s'il reste au moins une pompe de charge CPi active parmi les N pompes de charge CPi une fois la diminution du nombre de pompes de charge actives mise en oeuvre.

Toutefois, en pratique, le cas où le nombre de pompes de charge actives devrait être augmenté alors que les N pompes de charge CPi sont déjà actives ne devrait pas se produire si le nombre N a été choisi de sorte à assurer une alimentation correcte de la charge connectée au noeud 108 quelles que soient les conditions PVT.

Selon un mode de réalisation, un dispositif à pompe de charge du type de ceux décrits en relation avec les figures 2 et 3 est mis en oeuvre dans un capteur de lumière, par exemple un capteur de temps vol. Le capteur comprend une matrice de pixels ayant chacun une diode à avalanche à photon unique (SPAD de l'anglais "Single Photon Avalanche Photodiode"). Le dispositif est alors configuré pour alimenter la matrice de pixels, par exemple chaque pixel de la matrice, par exemple chaque SPAD du capteur.

Divers modes de réalisation et variantes ont été décrits. La personne du métier comprendra que certaines caractéristiques de ces divers modes de réalisation et variantes pourraient être combinées, et d'autres variantes apparaîtront à la personne du métier.

Enfin, la mise en oeuvre pratique des modes de réalisation et variantes décrits est à la portée de la personne du métier à partir des indications fonctionnelles données ci-dessus. En particulier, la personne du métier est en mesure, à partir de la description fonctionnelle faite ci-dessus, de mettre en oeuvre les circuits 110, 120 et 202.

## Revendications

1. Dispositif (2, 3) comprenant :
des pompes de charge (CP1, CP6) ayant chacune une première entrée (100) connectée à un premier noeud (106) configuré pour recevoir une tension d'entrée (Vin) des pompes de charge, une deuxième entrée (102) configurée pour recevoir un signal périodique (clk) de commande des commutations dans les pompes de charge et une sortie (104) connectée à un deuxième noeud (108) configuré pour fournir une tension de sortie (Vout) du dispositif, chaque pompe de charge étant configurée pour être sélectivement activée ou désactivée ;
un premier circuit (110) configuré pour fournir un signal (Err) indiquant un écart entre la tension de sortie (Vout) et une tension de consigne (Vref) ;
un deuxième circuit (120) configuré pour modifier un paramètre de fonctionnement desdites pompes de charge sur la base dudit signal (Err) ; et
un troisième circuit (202) configuré pour comparer une valeur courante dudit paramètre à un premier seuil et à un deuxième seuil, et, à partir du résultat des comparaisons,
pour commander l'un parmi une augmentation d'un nombre de pompes de charge actives, une diminution du nombre de pompes de charge actives et une conservation du nombre de pompes de charge actives.

2. Dispositif selon la revendication 1, dans lequel ledit paramètre appartient au groupe comprenant la fréquence du signal de commande (clk), la tension d'entrée (Vin), le seuil de transistors MOS configurés pour mettre en oeuvre des commutations dans les pompes de charge et des niveaux de tension grille-source desdits transistors.

3. Dispositif selon la revendication 1 ou 2, dans lequel le troisième circuit (202) est configuré pour commander :
une augmentation du nombre de pompes de charge actives quand le résultat des comparaisons indique que la valeur courante est d'un même premier côté desdits premier et deuxième seuils ;
une conservation du nombre de pompes de charge actives si le résultat des comparaisons indique que la valeur courante est comprise entre les premier et deuxième seuils ; et
une diminution du nombre de pompes de charge actives si le résultat des comparaisons indique que la valeur courante est d'un même deuxième côté desdits premier et deuxième seuils.

4. Dispositif selon la revendication 3, dans lequel le troisième circuit (202) comprend un premier comparateur pour comparer la valeur courante dudit paramètre au premier seuil, un deuxième comparateur pour comparer la valeur courante dudit paramètre au deuxième seuil, et un circuit de traitement configuré pour recevoir un signal de sortie de chacun des premier et deuxième comparateurs et pour fournir, sur la base de ces signaux de sortie, un signal sélectionnant l'état de chacune des pompes de charge parmi l'état activé et l'état désactivé.

5. Dispositif selon l'une quelconque des revendications 1 à 4, dans lequel ledit paramètre est choisi parmi la fréquence du signal de commande (clk) et la tension d'entrée (Vin), le troisième circuit (202) étant configuré pour commander :
une augmentation du nombre de pompes de charge actives si le résultat des comparaisons indique que la valeur courante est supérieure aux premier et deuxième seuils ;
une conservation du nombre de pompes de charge actives si le résultat des comparaisons indique que la valeur courante est comprise entre les premier et deuxième seuils ; et une diminution du nombre de pompes de charge actives si le résultat des comparaisons indique que la valeur courante est inférieure aux premier et deuxième seuils.

6. Dispositif selon l'une quelconque des revendications 1 à 5, dans lequel le paramètre est la tension d'entrée (Vin), la fréquence du signal de commande (clk) étant de préférence constante.

7. Dispositif selon la revendication 6, dans lequel le deuxième circuit (120) est configuré pour augmenter la tension d'entrée (Vin) si la tension de sortie (Vout) est inférieure à la tension de consigne (Vref) et pour diminuer la tension d'entrée (Vin) si la tension de sortie est supérieure à la tension de consigne.

8. Dispositif selon la revendication 6 ou 7, dans lequel :
le premier circuit (110) comprend un amplificateur opérationnel (112) ayant une entrée non-inverseuse configurée pour recevoir la tension de sortie (Vout), une entrée inverseuse configurée pour recevoir la tension de consigne (Vref), et une sortie configurée pour fournir le signal (Err) indiquant l'écart entre la tension de sortie (Vout) et la tension de consigne (Vref) ; et
le deuxième circuit (120) comprend un transistor MOS à canal P (126) connecté entre le premier noeud (106) et un noeud (124) configuré pour recevoir un potentiel d'alimentation (VDD), la grille du transistor étant connectée à la sortie de l'amplificateur opérationnel (112) du premier circuit (110).

9. Dispositif selon l'une quelconque des revendications 1 à 5, dans lequel le paramètre est la fréquence du signal de commande (clk), la tension d'entrée (Vin) étant de préférence constante.

10. Dispositif selon la revendication 9, dans lequel le deuxième circuit (120) est configuré pour augmenter la fréquence si la tension de sortie (Vout) est inférieure à la tension de consigne (Vref) et pour diminuer la fréquence si la tension de sortie (Vout) est supérieure à la tension de consigne (Vref).

11. Dispositif selon l'une quelconque des revendications 1 à 10, dans lequel le troisième circuit (202) est configuré, lorsque le résultat des comparaisons correspond à une augmentation du nombre de pompes de charge actives, pour déclencher une première temporisation et pour commander ladite augmentation à la fin de la première temporisation uniquement si le résultat des comparaisons est le même qu'au début de la première temporisation.

12. Dispositif selon l'une quelconque des revendications 1 à 11, dans lequel le troisième circuit (202) est configuré, lorsque le résultat des comparaisons correspond à une diminution du nombre de pompes de charge actives, pour déclencher une deuxième temporisation et pour commander ladite diminution à la fin de la deuxième temporisation uniquement si le résultat des comparaisons est le même qu'au début de la deuxième temporisation.

13. Capteur de temps vol comprenant un dispositif selon l'une quelconque des revendications 1 à 12 et une matrice de pixels comprenant chacun une diode à avalanche à photon unique, le dispositif étant configuré pour alimenter la matrice de pixels avec sa tension de sortie (Vout).
